(19) Europäisches Patentamt
European Patent Office
Office européen des brevets

(11) **EP 1 748 543 B1**

(12) **EUROPÄISCHE PATENTSCHRIFT**

(45) Veröffentlichungstag und Bekanntmachung des Hinweises auf die Patenterteilung:
**24.03.2010 Patentblatt 2010/12**

(21) Anmeldenummer: 06116142.8

(22) Anmeldetag: **27.06.2006**

(51) Int Cl.:
*H02M 7/515* $^{(2007.01)}$      *H02M 7/527* $^{(2006.01)}$

(54) **Verfahren und Vorrichtung zur Regelung einer elektrischen Maschine**

Method and apparatus for controlling an electrical machine

Méthode et dispositif de régulation d'une machine électrique

(84) Benannte Vertragsstaaten:
**CZ DE ES HU**

(30) Priorität: **27.07.2005 DE 102005035073**

(43) Veröffentlichungstag der Anmeldung:
**31.01.2007 Patentblatt 2007/05**

(73) Patentinhaber: **ROBERT BOSCH GMBH**
**70442 Stuttgart (DE)**

(72) Erfinder:
• **Sutter, Joerg**
**76571 Gaggenau (DE)**
• **Frey, Heiko**
**76476 Bischweier (DE)**
• **Jaervelaeinen, Tero**
**77815 Buehl (DE)**
• **Schmitt, Gilles**
**67100 Strasbourg (FR)**

(56) Entgegenhaltungen:
JP-A- 58 148 674      US-A- 5 872 710
US-A1- 2002 105 316

EP 1 748 543 B1

**Beschreibung**

Die Erfindung betrifft ein Verfahren sowie eine Vorrichtung zur Regelung einer elektrischen Maschine nach der Gattung der unabhängigen Ansprüche 1 und 9. Vorteilhafte Ausgestaltungen sind Gegenstand der auf diese rückbezogenen Unteransprüche.

Stand der Technik

Zum Betrieb mehrphasiger elektrischer Maschinen werden häufig Ansteuerelemente in Halbbrückenschaltung verwendet. Diese werden mit einem pulsweitenmodulierten Signal angesteuert, um so eine mittlere Spannung im Bereich zwischen einer negativen Versorgungsspannung und einer positiven Versorgungsspannung an den Maschinenklemmen zu stellen. Bei einem in Sternschaltung betriebenen dreiphasigen Motor ergibt sich die Spannung U_Stern am Sternpunkt gemäß U_Stern = 1/3*(U_Klemme1 + U_Klemme2 + U_Klemme3).

Typischerweise wird eine sinusförmige Spannung über einem Strang (U_Strang = U_Klemme - U_Stern) verlangt. Um hierbei eine höhere Ausnutzung des Wechselrichters zu erreichen, wird eine so genannte Raumzeigermodulation (Space-Vector-Modulation, SVM) verwendet. Dabei wird die sinusförmige Klemmenspannung U_Klemme mit einer Dreieckspannung der dreifachen Frequenz überlagert. Man unterscheidet zwei Arten der SVM.

Bei einer zweiphasigen SVM werden immer nur zwei Spannungen verändert und die dritte Spannung verbleibt für einen vorgegebenen Zeitraum fest auf 0V, bzw. auf dem Pegel der Versorgungsspannung U_Batterie. Die Rechenvorschrift zur Erzeugung der Spannungen bzw. der Tastverhältnisse lautet (eine Spannung soll immer auf 0V verbleiben):

$$\begin{bmatrix} Ua' \\ Ub' \\ Uc' \end{bmatrix} = \begin{bmatrix} Ua - U\min \\ Ub - U\min \\ Uc - U\min \end{bmatrix}$$

wobei gilt: Umin = min(Ua, Ub, Uc).

Bei einer dreiphasigen SVM werden alle drei Spannungen mit einer Dreieckspannung überlagert. Die Rechenvorschrift zur Erzeugung der Spannungen bzw. der Tastverhältnisse lautet:

$$\begin{bmatrix} Ua' \\ Ub' \\ Uc' \end{bmatrix} = \begin{bmatrix} Ua - \dfrac{(U\min + U\max)}{2} + 0{,}5 \\ Ub - \dfrac{(U\min + U\max)}{2} + 0{,}5 \\ Uc - \dfrac{(U\min + U\max)}{2} + 0{,}5 \end{bmatrix}$$

wobei gilt Umin = min (Ua, Ub, Uc) und Umax = max (Ua, Ub, Uc).

Ein weiteres Verfahren zur Erhöhung der Wechselrichterausnutzung ist die Überlagerung der Sinus Spannungen mit der 3. Harmonischen Oberwelle. Die Rechenvorschrift zur Erzeugung der Spannungen bzw. der Tastverhältnisse lautet:

$$\begin{bmatrix} Ua' \\ Ub' \\ Uc' \end{bmatrix} = \begin{bmatrix} Ua - Uow + 0{,}5 \\ Ub - Uow + 0{,}5 \\ Uc - Uow + 0{,}5 \end{bmatrix}$$

wobei gilt: Uow = 2 * Ua * Ub * Uc (Die Berechnung des Faktors "2" ist Applikationsabhängig).

Durch die beiden letzten beschriebenen Verfahren ist die sich ergebende Sternspannung nicht konstant. Daraus ergibt sich der Vorteil, dass Strangspannungen erzeugt werden können, die um bis zu 15,5% größer als die halbe Batteriespannung werden können. Es ergibt sich also eine höhere Ausnutzung des Wechselrichters.

Die erwähnte Raumzeigermodulation sowie die Modulation mit der addierten dritten Harmonischen sind beispielsweise im Technischen Bericht "PSpice-Simulation einer stromgeregelten, permanentmagneterregten Synchronmaschine (Dr.-Ing. J. Poschadel, Institut für Elektrische Maschinen, Antriebe und Bahnen, Technische Universität Braunschweig, August 1999) beschrieben.

Aus der JP 581148674 ist ferner eine Vorrichtung bekannt, bei der ein Motor über einen aus GTOs bestehenden, an einem Gleichspannungsnetz angeschlossenen Inverter mittels pulsweitenmodulierter Signale angesteuert wird. Die Ansteuersignale der GTOs weisen dabei keine Pulsweite auf, die kürzer ist als eine minimal zulässige Pulsweite. Zu diesem Zweck wird die Verzögerungszeit eines Verzögerungsschaltkreises betimmt, um einen möglichst effizienten Betrieb zu gewährleisten.

Vorteile der Erfindung

Für ein Verfahren zur Regelung einer elektrischen Maschine mit zumindest drei Phasen und mit einer Leistungsendstufe zur Ansteuerung der zumindest drei Phasen, wobei zur Steuerung der Leistungsendstufe Tastverhältnisse von Pulsweitenmodulationssignalen eingestellt werden, wobei die einzustellenden Solltastverhältnisse für die Pulsweitenmodulationssignale überprüft werden, wobei zur Anpassung der Tastverhältnisse der Pulsweitenmodulationssignale neue Pulsweitenmodulationssignale berechnet und als Ansteuersignale ausgegeben werden, wenn das Solltastverhältnis eines der Pulsweitenmodulationssignale einen vorgegebenen Minimalwert unterschreitet, und wobei die ursprünglichen Pulsweitenmodulationssignale als Ansteuersignale ausgegeben werden, wenn alle Solltastverhältnisse der Pulsweitenmodulationssignale größer oder gleich dem vorgegebenen Minimalwert (PWM_min) sind, wird erfindungsgemäß vorgeschlagen, für alle Modulationsarten, bei welchen alle Tastverhältnisse der drei Pulsweitenmodulationssignale verändert werden, z.B. für die Sinusmodulation, die dreiphasige Raumzeigermodulation und die Sinusmodulation mit der dritten Harmonischen, zur Bestimmung des Pulsweitenmodulationssignals Ua', Ub', Uc' mit dem kleinsten Tastverhältnis die Pulsweitenmodulationssignale Ua', Ub', Uc' nach der Größe ihrer Tastverhältnisse anzuordnen und in Abhängigkeit von der Anordnungsreihenfolge verschiedene gültige Zustände tab1 bis tab6 zu erkennen.

Wenn Ua'>Ub' und Ub'>Uc' und Ua'>Uc', dann tab = 6

Wenn Ua'>Ub' und Ub'>Uc' und Ua'<Uc', dann tab = ungültig

Wenn Ua'>Ub' und Ub'<Uc' und Ua'>Uc', dann tab = 5

Wenn Ua'>Ub' und Ub'<Uc' und Ua'<Uc', dann tab = 4

Wenn Ua'<Ub' und Ub'>Uc' und Ua'>Uc', dann tab = 3

Wenn Ua'<Ub' und Ub'>Uc' und Ua'<Uc', dann tab = 2

Wenn Ua'<Ub' und Ub'<Uc' und Ua'>Uc', dann tab = ungültig

Wenn Ua'<Ub' und Ub'<Uc' und Ua'<Uc', dann tab = 1

In vorteilhafter Weise kann dadurch eine Erzeugung von zu kleinen Pulsweiten vermieden werden, welche von den Leistungsschaltern nicht richtig ausgeführt werden können. Der Tastverhältnisbereich der pulsweiten modulierten Signale, mit denen ein Wechselrichter angesteuert werden kann, liegt typischerweise bei 4% bis 96%, wobei die untere Beschränkung durch die minimale Einschaltzeit der Leistungsschalter vorgegeben wird, und die obere Beschränkung durch den Brückentreiber bei typischerweise 20kHz Taktfrequenz vorgegeben wird. Das Verfahren ermöglicht darüber hinaus in vorteilhafter Weise eine sichere Erzeugung kleiner Strangspannungen mit großen Klemmenspannungen anstatt mit kleinen Klemmenspannungen, wodurch der untere Grenzbereich umgangen wird, welcher durch die Schaltzeiten der Leistungsschalter vorgegeben ist. Dadurch kann der effektive Tastverhältnisbereich auf 0% bis 96% vergrößert werden.

Zur Anpassung der Tastverhältnisse der Pulsweitenmodulationssignale wird in vorteilhafter Weise ein Tastverhältnis eines der Pulsweitenmodulationssignale um einen vorgegeben Wert angehoben, wenn das Solltastverhältnis eines der Pulsweitenmodulationssignale den vorgegebenen Minimalwert unterschreitet, wobei die Anhebung des Tastverhältnisses gleichzeitig durch eine Verschiebung der Tastverhältnisse der verbleibenden der Pulsweitenmodulationssignale kompensiert wird. Durch die Anhebung des Tastverhältnisses und der gleichzeitigen Kompensation dieser Verschiebung durch die anderen Tastverhältnisse kann der effektive Tastverhältnisbereich in vorteilhafter Weise auf 0% bis 96% vergrößert werden.

Der vorgegebene Wert zur Anhebung des Tastverhältnisses und/oder der vorgegebenen Minimalwert werden beispielsweise auf den Wert der unteren Beschränkung von z.B. 4% eingestellt, welcher durch die endlichen Schaltzeiten der verwendeten Leistungsschalter vorgegeben werden. Dadurch kann das erfindungsgemäße Verfahren in vorteilhafter Weise an verschiedene Ausführungsformen der Leistungsendstufe angepasst werden.

Ein erstes neues Pulsweitenmodulationssignal Ua" wird in Abhängigkeit vom erkannten Zustand tab1 bis tab6 beispielsweise gemäß der Rechenregel

$$Ua'' = \begin{bmatrix} (tab=1): & 0 \\ (tab=2): & 0 \\ (tab=3): & Ua'-Uc' \\ (tab=4): & Ua'-Ub' \\ (tab=5): & Ua'-Ub' \\ (tab=6): & Ua'-Uc' \end{bmatrix}$$

berechnet.

Ein zweites neues Pulsweitenmodulationssignal Ub" wird in Abhängigkeit vom erkannten Zustand tab1 bis tab6 beispielsweise gemäß der Rechenregel

$$Ub'' = \begin{bmatrix} (tab=1): & Ub'-Ua' \\ (tab=2): & Ub'-Ua' \\ (tab=3): & Ub'-Uc' \\ (tab=4): & 0 \\ (tab=5): & 0 \\ (tab=6): & Ub'-Uc' \end{bmatrix}$$

berechnet.

Ein drittes neues Pulsweitenmodulationssignal Ua" wird in Abhängigkeit vom erkannten Zustand tab1 bis tab6 beispielsweise gemäß der Rechenregel

$$Uc'' = \begin{bmatrix} (tab=1): & Uc'-Ua' \\ (tab=2): & Uc'-Ua' \\ (tab=3): & 0 \\ (tab=4): & Uc'-Ub' \\ (tab=5): & Uc'-Ub' \\ (tab=6): & 0 \end{bmatrix}$$

berechnet.

In alternativer Ausgestaltung des erfindungsgemäßen Verfahrens werden für alle Modulationsarten, bei welchen nur die Tastverhältnisse von zwei der drei Pulsweitenmodulationssignale verändert werden und das Tastverhältnis des dritten der Pulsweitenmodulationssignale für einen vorgegebenen Zeitraum auf 0 oder 1 eingestellt wird, z.B. für die zweiphasige Raumzeigermodulation, die neuen Pulsweitenmodulationssignale Ua", Ub", Uc" beispielsweise gemäß den Rechenregeln Ua" = Ua' + AW, Ub" = Ub' + AW, Uc" = Uc' + AW berechnet, wobei AW dem vorgegebenen Wert zur Anhebung des Tastverhältnisses entspricht.

Ferner betrifft die Erfindung eine Vorrichtung mit einer Auswerte- und Steuereinheit zur Steuerung einer Leistungsendstufe zur Durchführung des Verfahrens zur Regelung einer elektrischen Maschine mit zumindest drei Phasen, wobei die Auswerte- und Steuereinheit die einzustellenden Solltastverhältnisse für die Pulsweitenmodulationssignale Ua', Ub', Uc' überprüft und zur Anpassung der Tastverhältnisse der Pulsweitenmodulationssignale Ua', Ub', Uc' neue Pulsweitenmodulationssignale Ua", Ub", Uc" berechnet und als Ansteuersignale Ua''', Ub''', Uc''' ausgibt, wenn das Solltastverhältnis eines der Pulsweitenmodulationssignale Ua', Ub', Uc' einen vorgegebenen Minimalwert unterschreitet, wobei die Auswerte- und Steuereinheit die ursprünglichen Pulsweitenmodulationssignale Ua', Ub', Uc' als Ansteuersignale Ua''', Ub''', Uc''' ausgibt, wenn alle Solltastverhältnisse der Pulsweitenmodulationssignale Ua', Ub', Uc' größer oder gleich dem vorgegebenen Minimalwert sind, und wobei für alle Modulationsarten, bei welchen alle Tastverhältnisse der drei Pulsweitenmodulationssignale Ua', Ub', Uc' verändert werden, zur Bestimmung des Pulsweitenmodulationssignals Ua', Ub', Uc' mit dem kleinsten Tastverhältnis die Pulsweitenmodulationssignale Ua', Ub', Uc' nach der Größe ihrer Tastverhältnisse angeordnet werden und in Abhängigkeit von der Anordnungsreihenfolge verschiedene gültige.Zustände tab1 bis tab6 erkannt werden.

Zeichnungen

Die Erfindung wird nun anhand von Ausführungsbeispielen näher erläutert. Dabei zeigen:

Figur 1 eine Blockdiagramm einer Vorrichtung zur Durchführung eines Verfahrens zur Regelung einer elektrischen Maschine,

Figur 2 zeitliche Verläufe von verschiedenen Pulsweitenmodulationssignalen zur Regelung der elektrischen Maschine für eine erste Modulationsart,

Figur 3 zeitliche Verläufe von verschiedenen Pulsweitenmodulationssignalen zur Regelung der elektrischen Maschine für eine zweite Modulationsart,

Figur 4 zeitliche Verläufe von verschiedenen Pulsweitenmodulationssignalen zur Regelung der elektrischen Maschine für eine dritte Modulationsart, und

Figur 5 zeitliche Verläufe von verschiedenen Pulsweitenmodulationssignalen zur Regelung der elektrischen Maschine für eine vierte Modulationsart.

Beschreibung des Ausführungsbeispiels

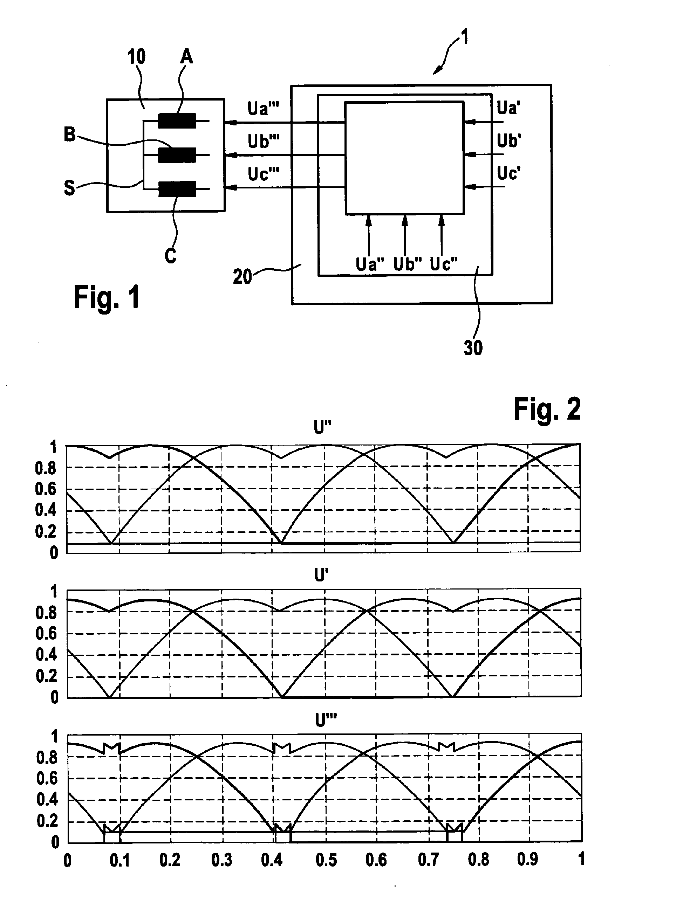

Wie aus Figur 1 ersichtlich ist, umfasst die Vorrichtung 1 zur Durchführung des Verfahrens zur Regelung einer elektrischen Maschine 10 mit zumindest drei Phasen A, B, C eine Leistungsendstufe 20 und eine Auswerte- und Steuereinheit 30. Die Auswerte- und Steuereinheit 30 überprüft zur Steuerung der Leistungsendstufe 20 einzustellende Solltastverhältnisse für die Pulsweitenmodulationssignalen Ua', Ub', Uc' und berechnet zur Anpassung der Tastverhältnisse der Pulsweitenmodulationssignale Ua', Ub', Uc' neue Pulsweitenmodulationssignale Ua", Ub", Uc", welche als Ansteuersignale Ua"', Ub"', Uc"' ausgegeben werden, wenn das Solltastverhältnis eines der Pulsweitenmodulationssignale Ua', Ub', Uc' einen vorgegebenen Minimalwert PWM_min unterschreitet. Die Auswerte- und Steuereinheit gibt die ursprünglichen Pulsweitenmodulationssignale Ua', Ub', Uc' als Ansteuersignale Ua"', Ub"', Uc"' aus, wenn alle Solltastverhältnisse der Pulsweitenmodulationssignale Ua', Ub', Uc' größer oder gleich dem vorgegebenen Minimalwert PWM_min sind. Der vorgegebenen Minimalwert PWM_min wird auf den durch die endlichen Schaltzeiten der verwendeten Leistungsschalter vorgegeben unteren Beschränkungswert, vorzugsweise auf 4%, eingestellt.
Figur 2 zeigt zeitliche Verläufe von verschiedenen Pulsweitenmodulationssignalen zur Regelung der elektrischen Maschine für die eine erste Modulationsart. Die dargestellte erste Modulationsart entspricht der zweiphasigen Raumzeigermodulation und repräsentiert Modulationsarten, bei welchen nur die Tastverhältnisse von zwei der drei Pulsweitenmodulationssignale Ua', Ub', Uc' verändert werden und das Tastverhältnis des dritten der Pulsweitenmodulationssignale Ua', Ub', Uc' für einen vorgegebenen Zeitraum auf 0 oder 1 eingestellt wird. Es wird nur die Variante betrachtet, bei der die dritte Phase für einen längen Zeitraum komplett auf 0 verbleibt.
Wenn das Solltastverhältnis eines der Pulsweitenmodulationssignale Ua', Ub', Uc' den vorgegebenen Minimalwert PWM_min unterschreitet und größer Null ist, dann werden die neu berechneten Pulsweitenmodulationssignale Ua", Ub", Uc" gemäß den Rechenregeln Ua" = Ua' + AW, Ub" = Ub' + AW, Uc" = Uc' + AW berechnet und als Ausgabesignale Ua"', Ub"' und Uc"' ausgegeben. Der Wert AW zur Anhebung der Tastverhältnisse und zur Erzeugung der Pulsweitenmodulationssignale Ua", Ub", Uc" entspricht beispielsweise ebenfalls dem durch die endlichen Schaltzeiten der verwendeten Leistungsschalter vorgegebenen unteren Beschränkungswert und wird vorzugsweise auf 4% eingestellt. Sind alle Solltastverhältnisse der Pulsweitenmodulationssignale Ua', Ub', Uc' größer oder gleich dem vorgegebenen Minimalwert PWM_min, dann werden die ursprünglichen Pulsweitenmodulationssignale Ua', Ub', Uc' als Ansteuersignale Ua"', Ub"', Uc"' ausgegeben. Die sich ergebenden Tastverhältnisse sind in Figur 2 beispielhaft für die zweiphasige Raumzeigermodulation dargestellt. Zur besseren Darstellung der Auswirkung des Verfahrens wurde hier PWM_min auf 8% gesetzt.

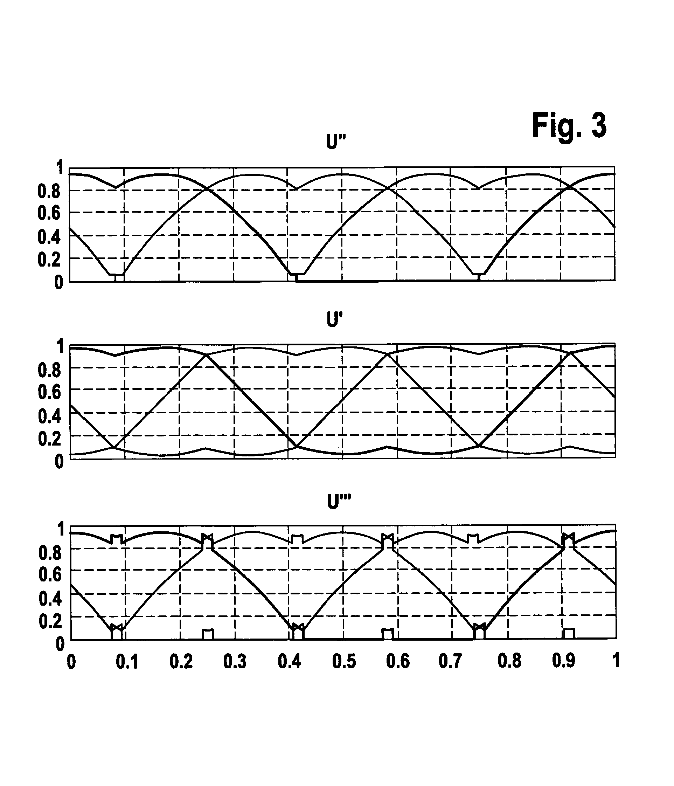

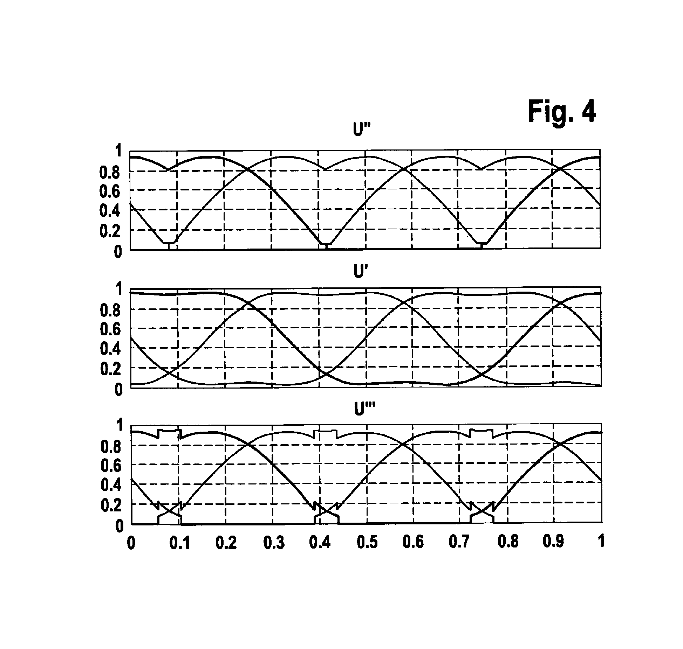

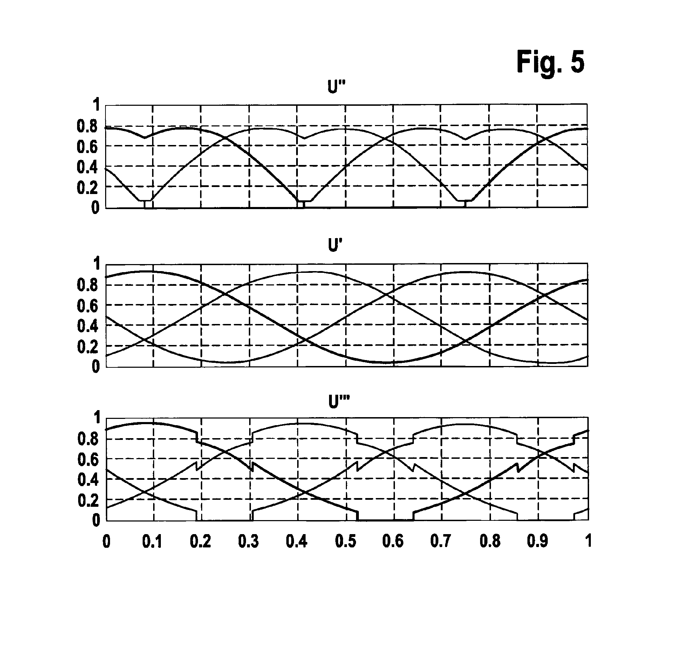

Die Figuren 3 bis 5 zeigen zeitliche Verläufe von verschiedenen Pulsweitenmodulationssignalen zur Regelung der elektrischen Maschine für verschiedene Modulationsarten, bei welchen alle Tastverhältnisse der drei Pulsweitenmodulationssignale Ua', Ub', Uc' verändert werden. Die in Figur 3 dargestellte zweite Modulationsart entspricht der dreiphasigen Raumzeigermodulation. Die in Figur 4 dargestellte dritte Modulationsart entspricht der Sinusmodulation mit der dritten Harmonischen und die in Figur 5 dargestellte vierte Modulationsart entspricht der Sinusmodulation.
Für die in den Figuren 3 bis 5 dargestellten Pulsweitenmodulationssignale werden die nachfolgend beschriebenen gemeinsamen Rechenregeln verwendet. Zur Bestimmung des Pulsweitenmodulationssignals Ua', Ub', Uc' mit dem kleinsten Tastverhältnis werden die Pulsweitenmodulationssignale Ua', Ub', Uc' nach der Größe ihrer Tastverhältnisse angeordnet und in Abhängigkeit von der Anordnungsreihenfolge werden verschiedene gültige Zustände tab1 bis tab6 erkannt.

Wenn Ua'>Ub' und Ub'>Uc' und Ua'>Uc', dann tab = 6
Wenn Ua'>Ub' und Ub'>Uc' und Ua'<Uc', dann tab = ungültig
Wenn Ua'>Ub' und Ub'<Uc' und Ua'>Uc', dann tab = 5
Wenn Ua'>Ub' und Ub'<Uc' und Ua'<Uc', dann tab = 4
Wenn Ua'<Ub' und Ub'>Uc' und Ua'>Uc', dann tab = 3
Wenn Ua'<Ub' und Ub'>Uc' und Ua'<Uc', dann tab = 2
Wenn Ua'<Ub' und Ub'<Uc' und Ua'>Uc', dann tab = ungültig
Wenn Ua'<Ub' und Ub'<Uc' und Ua'<Uc', dann tab = 1

Wenn das Solltastverhältnis eines der Pulsweitenmodulationssignale Ua', Ub', Uc' den vorgegebenen Minimalwert PWM_min unterschreitet, dann werden die neuen Pulsweitenmodulationssignale Ua", Ub", Uc" in Abhängigkeit vom erkannten Zustand tab1 bis tab 6 berechnet und als Ausgabesignale Ua''', Ub''' und Uc''' ausgegeben.

Das erste neue Pulsweitenmodulationssignal Ua" wird gemäß der Rechenregel

$$
Ua'' = \begin{bmatrix}
(tab = 1): & 0 \\
(tab = 2): & 0 \\
(tab = 3): & Ua' - Uc' \\
(tab = 4): & Ua' - Ub' \\
(tab = 5): & Ua' - Ub' \\
(tab = 6): & Ua' - Uc'
\end{bmatrix}
$$

berechnet, wobei das berechnete Pulsweitenmodulationssignal Ua" im Bereich von 4% bis 96% angeordnet ist, wenn es größer als 0 ist.

Das zweite neue Pulsweitenmodulationssignal Ub" wird gemäß der Rechenregel

$$
Ub'' = \begin{bmatrix}
(tab = 1): & Ub' - Ua' \\
(tab = 2): & Ub' - Ua' \\
(tab = 3): & Ub' - Uc' \\
(tab = 4): & 0 \\
(tab = 5): & 0 \\
(tab = 6): & Ub' - Uc'
\end{bmatrix}
$$

berechnet, wobei das berechnete Pulsweitenmodulationssignal Ub" im Bereich von 4% bis 96% angeordnet ist, wenn es größer als 0 ist.

Das dritte Pulsweitenmodulationssignal Uc" wird gemäß der Rechenregel

$$
Uc'' = \begin{bmatrix}
(tab = 1): & Uc' - Ua' \\
(tab = 2): & Uc' - Ua' \\
(tab = 3): & 0 \\
(tab = 4): & Uc' - Ub' \\
(tab = 5): & Uc' - Ub' \\
(tab = 6): & 0
\end{bmatrix}
$$

berechnet, wobei das berechnete Pulsweitenmodulationssignal Uc'' im Bereich von 4% bis 96% angeordnet ist, wenn es größer als 0 ist.

Sind alle Solltastverhältnisse der Pulsweitenmodulationssignale Ua', Ub', Uc' größer oder gleich dem vorgegebenen Minimalwert PWM_min, dann werden die ursprünglichen Pulsweitenmodulationssignale Ua', Ub', Uc' als Ansteuersignale Ua''', Ub''', Uc''' ausgegeben. Die sich ergebenden Tastverhältnisse sind in den Figuren 3 bis 5 beispielhaft für die o. g. Modulationsverfahren dargestellt. Zur besseren Darstellung der Auswirkung des Verfahrens wurde hier PWM_min auf 8% gesetzt.

**Patentansprüche**

1. Verfahren zur Regelung einer elektrischen Maschine (10) mit zumindest drei Phasen (A, B, C) und mit einer Leistungsendstufe (20) zur Ansteuerung der zumindest drei Phasen (A, B, C), wobei zur Steuerung der Leistungsendstufe (20) Tastverhältnisse von Pulsweitenmodulationssignalen (Ua', Ub', Uc') eingestellt werden, wobei die einzustellenden Solltastverhältnisse für die Pulsweitenmodulationssignale (Ua', Ub', Uc') überprüft werden, wobei zur Anpassung der Tastverhältnisse der Pulsweitenmodulationssignale (Ua', Ub', Uc') neue Pulsweitenmodulationssignale (Ua'', Ub'', Uc'') berechnet und als Ansteuersignale (Ua''', Ub''', Uc''') ausgegeben werden, wenn das Solltastverhältnis eines der Pulsweitenmodulationssignale (Ua', Ub', Uc') einen vorgegebenen Minimalwert (PWM_min) unterschreitet, und wobei die ursprünglichen Pulsweitenmodulationssignale (Ua', Ub', Uc') als Ansteuersignale (Ua''', Ub''', Uc''') ausgegeben werden, wenn alle Solltastverhältnisse der Pulsweitenmodulationssignale (Ua', Ub', Uc') größer oder gleich dem vorgegebenen Minimalwert (PWM_min) sind, **dadurch gekennzeichnet, dass** für alle Modulationsarten, bei welchen alle Tastverhältnisse der drei Pulsweitenmodulationssignale (Ua', Ub', Uc') verändert werden, zur Bestimmung des Pulsweitenmodulationssignals (Ua', Ub', Uc') mit dem kleinsten Tastverhältnis die Pulsweitenmodulationssignale (Ua', Ub', Uc') nach der Größe ihrer Tastverhältnisse angeordnet werden und in Abhängigkeit von der Anordnungsreihenfolge verschiedene gültige Zustände (tab1 bis tab6) erkannt werden,

2. Verfahren nach Anspruch 1, **dadurch gekennzeichnet, dass** zur Anpassung der Tastverhältnisse der Pulsweitenmodulationssignale (Ua', Ub', Uc') ein Tastverhältnis eines der Pulsweitenmodulationssignale (Ua', Ub', Uc') um einen vorgegeben Wert (AW) angehoben wird, wenn das Solltastverhältnis des einen der Pulsweitenmodulationssignale (Ua', Ub', Uc') den vorgegebenen Minimalwert (PWM_min) unterschreitet, wobei die Anhebung des Tastverhältnisses gleichzeitig durch eine Verschiebung der Tastverhältnisse der verbleibenden der Pulsweitenmodulationssignale (Ua', Ub', Uc') kompensiert wird.

3. Verfahren nach Anspruch 2, **dadurch gekennzeichnet, dass** der vorgegebene Wert (AW) zur Anhebung des Tastverhältnisses auf einen durch die endlichen Schaltzeiten der verwendeten Leistungsschalter vorgegeben Beschränkungswert, vorzugsweise auf 4%, eingestellt wird.

4. Verfahren nach einem der vorherigen Ansprüche, **dadurch gekennzeichnet, dass** der vorgegebenen Minimalwert (PWM_min) auf den durch die endlichen Schaltzeiten der verwendeten Leistungsschalter vorgegeben Beschränkungswert, vorzugsweise auf 4%, eingestellt wird.

5. Verfahren nach Anspruch 1, **dadurch gekennzeichnet, dass** ein erstes Pulsweitenmodulationssignal (Ua'') in Abhängigkeit vom erkannten Zustand (tab1 bis tab6) gemäß der Rechenregel

$$Ua'' = \begin{bmatrix} (tab = 1): & 0 \\ (tab = 2): & 0 \\ (tab = 3): & Ua' - Uc' \\ (tab = 4): & Ua' - Ub' \\ (tab = 5): & Ua' - Ub' \\ (tab = 6): & Ua' - Uc' \end{bmatrix}$$

berechnet wird.

6. Verfahren nach Anspruch 1 oder 5, **dadurch gekennzeichnet, dass** ein zweites Pulsweitenmodulationssignal (Ub") in Abhängigkeit vom erkannten Zustand (tab1 bis tab6) gemäß der Rechenregel

$$Ub'' = \begin{bmatrix} (tab = 1): & Ub' - Ua' \\ (tab = 2): & Ub' - Ua' \\ (tab = 3): & Ub' - Uc' \\ (tab = 4): & 0 \\ (tab = 5): & 0 \\ (tab = 6): & Ub' - Uc' \end{bmatrix}$$

berechnet wird.

7. Verfahren nach einem der Ansprüche 1, 5 oder 6, **dadurch gekennzeichnet, dass** ein drittes Pulsweitenmodulationssignal (Uc") in Abhängigkeit vom erkannten Zustand (tab1 bis tab6) gemäß der Rechenregel

$$Uc'' = \begin{bmatrix} (tab = 1): & Uc' - Ua' \\ (tab = 2): & Uc' - Ua' \\ (tab = 3): & 0 \\ (tab = 4): & Uc' - Ub' \\ (tab = 5): & Uc' - Ub' \\ (tab = 6): & 0 \end{bmatrix}$$

berechnet wird.

8. Verfahren nach einem der Ansprüche 1 bis 4, **dadurch gekennzeichnet, dass** für alle Modulationsarten, bei welchen nur die Tastverhältnisse von zwei der drei Pulsweitenmodulationssignale (Ua', Ub', Uc') verändert werden und das Tastverhältnis eines dritten der Pulsweitenmodulationssignale (Ua', Ub', Uc') für einen vorgegebenen Zeitraum auf 0 oder 1 eingestellt wird, die neuen Pulsweitenmodulationssignale (Ua", Ub", Uc") gemäß den Rechenregeln Ua" = Ua' + AW, Ub" = Ub' + AW, Uc" = Uc' + AW berechnet werden.

9. Vorrichtung zur Regelung einer elektrischen Maschine (10) mit zumindest drei Phasen (A, B, C), aufweisend:

> eine Leistungsendstufe (20) zur Ansteuerung der zumindest drei Phasen (A, B, C),
> eine Auswerte- und Steuereinheit (30) zur Steuerung der Leistungsendstufe (20) durch das
>
>> - Bereitstellen von Pulsweitenmodulationssignalen (Ua', Ub', Uc') mit entsprechenden Tastverhältnissen,
>> - Überprüfen der einzustellenden Solltastverhältnisse für diese Pulsweitenmodulationssignale (Ua', Ub', Uc'),
>> - Berechnen neuer Pulsweitenmodulationssignale (Ua", Ub", Uc") zur Anpassung der Tastverhältnissen der Pulsweitenmodulationssignale (Ua', Ub', Uc'), wenn das Solltastverhältnis eines der Pulsweitenmodulationssignale (Ua', Ub', Uc') einen vorgegebenen Minimalwert (PWM_min) unterschreitet,
>> - Ausgeben der ursprünglichen Pulsweitenmodulationssignale (Ua', Ub', Uc') als Ansteuersignale (Ua", Ub", Uc"), wenn alle Solltastverhältnisse der Pulsweitenmodulationssignale größer oder gleich dem vorgegebenen Minimalwert (PWM_min) sind,
>
> **dadurch gekennzeichnet, dass**
> die Auswerte- und Steuereinheit (30) für alle Modulationsarten, bei welchen alle Tastverhältnisse der drei Pulsweitenmodulationssignale (Ua', Ub', Uc') verändert werden, zur Bestimmung des Pulsweitenmodulationssignals (Ua', Ub', Uc') mit dem kleinsten Tastverhältnis

- die Pulsweitenmodulationssignale (Ua', Ub', Uc') nach der Größe ihrer Tastverhältnisse anordnet und
- in Abhängigkeit von der Anordnungsreihenfolge verschiedene gültige Zustände (tab1 bis tab6) erkennt.

**Claims**

1. Method for regulating an electrical machine (10) having at least three phases (A, B, C) and having a power output stage (20) for driving the at least three phases (A, B, C), with pulse duty factors of pulse-width-modulation signals (Ua', Ub', Uc') being adjusted in order to control the power output stage (20), with the setpoint pulse duty factors for the pulse-width-modulation signals (Ua', Ub', Uc') to be adjusted being checked, with new pulse-width-modulation signals (Ua", Ub", Uc") being calculated and output as drive signals (Ua"', Ub"', Uc"') in order to adapt the pulse duty factors of the pulse-width-modulation signals (Ua', Ub', Uc') if the setpoint pulse duty factor of one of the pulse-width-modulation signals (Ua', Ub', Uc') falls below a predefined minimum value (PWM_min), and with the original pulse-width-modulation signals (Ua', Ub', Uc') being output as drive signals (Ua"', Ub"', Uc"') if all the setpoint pulse duty factors of the pulse-width-modulation signals (Ua', Ub', Uc') are greater than or equal to the predefined minimum value (PWM_min), **characterized in that**, for all modulation types in which all the pulse duty factors of the three pulse-width-modulation signals (Ua', Ub', Uc') are changed, the pulse-width-modulation signals (Ua', Ub', Uc') are arranged in accordance with the value of their pulse duty factors and various applicable states (tab1 to tab6) are identified as a function of the arrangement sequence in order to determine the pulse-width-modulation signal (Ua', Ub', Uc') with the smallest pulse duty factor.

2. Method according to Claim 1, **characterized** that, in order to adapt the pulse duty factors of the pulse-width-modulation signals (Ua', Ub', Uc'), a pulse duty factor of one of the pulse-width-modulation signals (Ua', Ub', Uc') is increased by a predefined value (AW) if the setpoint pulse duty factor of one of the pulse-width-modulation signals (Ua', Ub', Uc') falls below the predefined minimum value (PWM_min), with the increase in the pulse duty factor simultaneously being compensated for by a shift in the pulse duty factors of the remaining pulse-width-modulation signals (Ua', Ub', Uc').

3. Method according to Claim 2, **characterized in that** the predefined value (AW) for increasing the pulse duty factor is set to a limit value which is predefined by the finite switching times of the circuit breakers used, preferably to 4%.

4. Method according to one of the preceding claims, **characterized in that** the predefined minimum value (PWM_min) is set to the limit value which is predefined by the finite switching times of the circuit breakers used, preferably to 4%.

5. Method according to Claim 1, **characterized in that** a first pulse-width-modulation signal (Ua") is calculated as a function of the identified state (tab1 to tab6) in accordance with the calculation rule

$$Ua'' = \begin{bmatrix} (tab=1): & 0 \\ (tab=2): & 0 \\ (tab=3): & Ua'-Uc' \\ (tab=4): & Ua'-Ub' \\ (tab=5): & Ua'-Ub' \\ (tab=6): & Ua'-Uc' \end{bmatrix}.$$

6. Method according to Claim 1 or 5, **characterized in that** a second pulse-width-modulation signal (Ub") is calculated as a function of the identified state (tab1 to tab6) in accordance with the calculation rule

$$Ub''=\begin{bmatrix}(tab=1): & Ub'-Ua'\\(tab=2): & Ub'-Ua'\\(tab=3): & Ub'-Uc'\\(tab=4): & 0\\(tab=5): & 0\\(tab=6): & Ub'-Uc'\end{bmatrix}.$$

**7.** Method according to one of Claims 1, 5 and 6, **characterized in that** a third pulse-width-modulation signal (Uc'') is calculated as a function of the identified state (tab1 to tab6) in accordance with the calculation rule

$$Uc''=\begin{bmatrix}(tab=1): & Uc'-Ua'\\(tab=2): & Uc'-Ua'\\(tab=3): & 0\\(tab=4): & Uc'-Ub'\\(tab=5): & Uc'-Ub'\\(tab=6): & 0\end{bmatrix}.$$

**8.** Method according to one of Claims 1 to 4, **characterized in that**, for all modulation types in which only the pulse duty factors of two of the three pulse-width-modulation signals (Ua', Ub', Uc') are changed and the pulse duty factor of a third of the pulse-width-modulation signals (Ua', Ub', Uc') is set to 0 or 1 for a predefined time period, the new pulse-width-modulation signals (Ua'', Ub'', Uc'') are calculated in accordance with the calculation rules Ua''=Ua'+AW, Ub''=Ub'+AW, UC''=Uc'+AW.

**9.** Apparatus for regulating an electrical machine (10) having at least three phases (A, B, C), comprising:

a power output stage (20) for driving the at least three phases (A, B, C),
an evaluation and control unit (30) for controlling the power output stage (20) by

- providing pulse-width-modulation signals (Ua', Ub', Uc') having corresponding pulse duty factors,
- checking the setpoint pulse duty factors for these pulse-width-modulation signals (Ua', Ub', Uc') to be adjusted,
- calculating new pulse-width-modulation signals (Ua'', Ub'', Uc'') in order to adapt the pulse duty factors of the pulse-width-modulation signals (Ua', Ub', Uc') if the setpoint pulse duty factor of one of the pulse-width-modulation signals (Ua', Ub', Uc') falls below a predefined minimum value (PWM_min),
- outputting the original pulse-width-modulation signals (Ua', Ub', Uc') as drive signals if all the setpoint pulse duty factors of the pulse-width-modulation signals are greater than or equal to the predefined minimum value (PWM_min),

**characterized in that**,
for all modulation types in which all the pulse duty factors of the three pulse-width-modulation signals (Ua', Ub', Uc') are changed, the evaluation and control unit (30)

- arranges the pulse-width-modulation signals (Ua', Ub', Uc') in accordance with the value of their pulse duty factors and
- identifies various applicable states (tab1 to tab6) as a function of the arrangement sequence,

in order to determine the pulse-width-modulation signal (Ua', Ub', Uc') with the smallest pulse duty factor.

**Revendications**

1. Procédé de régulation d'une machine électrique (10) qui présente au moins trois phases (A, B, C) et un étage final de puissance (20) qui commande les trois phases (A, B, C) ou plus, dans lequel

pour commander l'étage final de puissance (20), des rapports d'échantillonnage de signaux (Ua', Ub', Uc') de modulation de la largeur des impulsions sont établis, les rapports d'échantillonnage de consigne à établir pour les signaux (Ua', Ub', Uc') de modulation de la largeur des impulsions étant vérifiés,

pour adapter les rapports d'échantillonnage des signaux (Ua', Ub', Uc') de modulation de la largeur des impulsions, de nouveaux signaux (Ua", Ub", Uc") de modulation de la largeur des impulsions sont calculés et sont délivrés sous la forme de signaux de commande (Ua''', Ub''', Uc''') si le rapport d'échantillonnage de consigne d'un des signaux (Ua', Ub', Uc') de modulation de la largeur des impulsions n'atteint pas une valeur minimale prédéterminée (PWM_min),

les signaux initiaux (Ua', Ub', Uc') de modulation de la largeur des impulsions étant délivrés comme signaux de commande (Ua''', Ub''', Uc''') lorsque tous les rapports d'échantillonnage de consigne des signaux (Ua', Ub', Uc') de modulation de la largeur des impulsions sont supérieurs ou égaux à la valeur minimale prédéterminée (PWM_min), **caractérisé en ce que**

pour tous les types de modulation dans lesquels tous les rapports d'échantillonnage des trois signaux (Ua', Ub', Uc') de modulation de la largeur des impulsions sont modifiés, pour déterminer le signal (Ua', Ub', Uc') de modulation de la largeur des impulsions qui présente le plus petit rapport d'échantillonnage, les signaux (Ua', Ub', Uc') de modulation de la largeur des impulsions sont agencés en fonction du niveau de leur rapport d'échantillonnage et différents états valides (tab1 à tab6) sont détectés en fonction de la succession de l'agencement.

2. Procédé selon la revendication 1, **caractérisé en ce que** pour adapter les rapports d'échantillonnage des signaux (Ua', Ub', Uc') de modulation de la largeur des impulsions, un rapport d'échantillonnage de l'un des signaux (Ua', Ub', Uc') de modulation de la largeur des impulsions est relevé d'une valeur prédéterminée (AW) si le rapport d'échantillonnage de consigne de l'un des signaux (Ua', Ub', Uc') de modulation de la largeur des impulsions n'atteint pas la valeur minimale prédéterminée (PWM_min), le relèvement du rapport d'échantillonnage étant compensé simultanément par un décalage du rapport d'échantillonnage des signaux (Ua', Ub', Uc') de modulation de la largeur des impulsions restants.

3. Procédé selon la revendication 2, **caractérisé en ce que** la valeur prédéterminée (AW) utilisée pour relever le rapport d'échantillonnage est établie à une valeur restreinte prédéterminée par les temps finaux de commutation du commutateur de puissance utilisé, et de préférence à 4 %.

4. Procédé selon l'une des revendications précédentes, **caractérisé en ce que** la valeur minimale prédéterminée (PWM_min) est établie à la valeur restreinte prédéterminée par les temps de commutation finaux des commutateurs de puissance utilisés et de préférence à 4 %.

5. Procédé selon la revendication 1, **caractérisé en ce qu'**un premier signal (Ua") de modulation de la largeur des impulsions est calculé en fonction de l'état (tab1 à tab6) détecté selon la règle de calcul :

$$
Ua'' = \begin{bmatrix}
(tab=1): & 0 \\
(tab=2): & 0 \\
(tab=3): & Ua'-Uc' \\
(tab=4): & Ua'-Ub' \\
(tab=5): & Ua'-Ub' \\
(tab=6): & Ua'-Uc'
\end{bmatrix}
$$

6. Procédé selon la revendication 1 ou 5, **caractérisé en ce qu'**un deuxième signal (Ub") de modulation de la largeur des impulsions est calculé en fonction de l'état (tab1 à tab6) détecté selon la règle de calcul :

$$Ub'' = \begin{bmatrix} (tab = 1): & Ub' - Ua' \\ (tab = 2): & Ub' - Ua' \\ (tab = 3): & Ub' - Uc' \\ (tab = 4): & 0 \\ (tab = 5): & 0 \\ (tab = 6): & Ub' - Uc' \end{bmatrix}$$

7. Procédé selon l'une des revendications 1, 5 ou 6, **caractérisé en ce qu'**un troisième signal (Uc") de modulation de la largeur des impulsions est calculé en fonction de l'état (tab1 à tab6) détecté selon la règle de calcul :

$$Uc'' = \begin{bmatrix} (tab = 1): & Uc' - Ua' \\ (tab = 2): & Uc' - Ua' \\ (tab = 3): & 0 \\ (tab = 4): & Uc' - Ub' \\ (tab = 5): & Uc' - Ub' \\ (tab = 6): & 0 \end{bmatrix}$$

8. Procédé selon l'une des revendications 1 à 4, **caractérisé en ce que** pour tous les types de modulation dans lesquels seuls les rapports d'échantillonnage de deux des trois signaux (Ua', Ub', Uc') de modulation de la largeur des impulsions sont modifiés et **en ce que** le rapport d'échantillonnage d'un troisième des signaux (Ua', Ub', Uc') de modulation de la largeur des impulsions est établi à 0 ou à 1 pendant une durée prédéterminée, les nouveaux signaux (Ua", Ub", Uc") de modulation de la largeur des impulsions étant calculés selon les règles de calcul Ua" = Ua' + AW, Ub" = Ub' + AW, Uc" = Uc' + AW.

9. Dispositif de régulation d'une machine électrique (10) qui présente au moins trois phases (A, B, C), et présentant :

   un étage final de puissance (20) qui commande les trois phases (A, B, C) ou plus,
   une unité (30) d'évaluation et de commande qui commande l'étage final de puissance (20)
   en préparant des signaux (Ua', Ub', Uc') de modulation de la largeur des impulsions dotés de rapports d'échantillonnage respectifs,
   en vérifiant les rapports d'échantillonnage de consigne à établir pour ces signaux (Ua', Ub', Uc') de modulation de la largeur des impulsions,
   en calculant de nouveaux signaux (Ua", Ub", Uc") de modulation de la largeur des impulsions en vue d'adapter les rapports d'échantillonnage des signaux (Ua', Ub', Uc') de modulation de la largeur des impulsions si le rapport d'échantillonnage de consigne de l'un des signaux (Ua', Ub', Uc') de modulation de la largeur des impulsions n'atteint pas une valeur minimale (PWM_min) prédéterminée,
   en délivrant les signaux initiaux (Ua', Ub', Uc') de modulation de la largeur des impulsions comme signaux de commande (Ua", Ub", Uc") si tous les rapports d'échantillonnage de consigne des signaux de modulation de largeur des impulsions sont supérieurs ou égaux à la valeur minimale (PWM_min) prédéterminée,

   **caractérisé en ce que**
   pour tous les types de modulation dans lesquels les rapports d'échantillonnage des trois signaux (Ua', Ub', Uc') de modulation de la largeur des impulsions sont modifiés, l'unité (30) d'évaluation et de commande
   agence les signaux (Ua', Ub', Uc') de modulation de la largeur des impulsions en fonction du niveau de leurs rapports d'échantillonnage et
   détecte les différents états valides (tab1 à tab6) en fonction de la succession de l'agencement
   pour déterminer le signal (Ua', Ub', Uc') de modulation de la largeur des impulsions qui présente le plus petit rapport d'échantillonnage.

**10**   **A**

**B**

**S**

**C**

Ua'''

Ub'''

Uc'''

**1**

Ua'

Ub'

Uc'

Ua"  Ub"  Uc"

**20**

**30**

## Fig. 1

## Fig. 2

U"

U'

U'''

Fig. 3

**Fig. 4**

U''

U'

U'''

# Fig. 5

U"

U'

U""

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP 581148674 B